# EUROPÄISCHE PATENTSCHRIFT

(11) **EP 1 400 573 B1**
(45) Veröffentlichungstag und Bekanntmachung des Hinweises auf die Patenterteilung: **21.11.2007**
(21) Anmeldenummer: 03020372.3
(22) Anmeldetag: 10.09.2003
(51) Int. Cl.: C09D 5/18

(54) **Brandschutzbeschichtung**
Fireproof coating
Revêtement ignifuge

(30) Priorität: 17.09.2002 DE 10243231
(43) Veröffentlichungstag der Anmeldung: 24.03.2004
(73) Patentinhaber: Clariant Produkte (Deutschland) GmbH, 65929 Frankfurt am Main (DE)
(72) Erfinder: Thewes, Volker, 50374 Erftstadt (DE); Zurstrassen, Andrea, 50939 Köln (DE)

(56) Entgegenhaltungen:
- US-A- 3 658 791
- US-A- 3 666 543
- US-A- 4 001 034
- US-A- 4 221 837

## Beschreibung

Die Erfindung betrifft eine dämmschichtbildende Brandschutzbeschichtung auf Basis von im Brandfall schaumschichtbildenden und kohlenstoffbildenden Substanzen, filmbildenden Bindemitteln, Treibmitteln und üblichen Hilfs- und Zusatzstoffen.

Dämmschichtbildende Brandschutzbeschichtungen, auch Intumeszenzbeschichtungen genannt, zeichnen sich dadurch aus, dass sie im Brandfall unter entsprechender Temperatureinwirkung aufschäumen und durch dieses Aufschäumen der vorgenannten Brandschutzbeschichtung der Wärmedurchtritt auf Stahlkonstruktionen, Decken, Wände, Kabel, Rohre und dergleichen verhindert oder zumindest behindert wird.

Die US 4,965,296 A1 beschreibt ein flammhemmendes Material, das sich aus einem flammhemmenden Beschichtungsmaterial und einem elektrisch leitfähigen Material zusammensetzt. Das flammhemmende Beschichtungsmaterial besteht dabei aus schaum- und kohlenstoffbildenden Substanzen, einer gaserzeugenden Verbindung, einem filmbildenden Bindemittel und entsprechenden Lösemitteln. Fakultativ können übliche, weitere Inhaltsstoffe anwesend sein.

In der US 4,879,320 wird eine ähnliche flammhemmende Zusammensetzung beschrieben, der jedoch anstelle eines leitfähigen Materials ein keramisches Fasermaterial zugesetzt ist.

Die US 5,225,464 beschreibt eine wässrige Intumeszenz-Formulierung auf Basis eines Reaktionsproduktes aus Phosphorsäure, Melamin und Monoammoniumphosphat, welche mit Pentaerythritol, chlorierten Kohlenwasserstoffen und weiteren Verbindungen, insbesondere Polyvinylacetat, ein verbessertes Intumeszenz-Beschichtungsmaterial liefern soll.

Die DE 42 18 184 A1 beschreibt ein wässriges Bindemittelgemisch, bestehend aus einer wässrigen Lösung und/oder Dispersion einer Kombination aus a) mindestens einem in Gegenwart der Komponente b) in Wasser löslichen und/oder dispergierbaren, Urethangruppen aufweisenden NCO-Vorpolymer mit blockierten Isocyanatgruppen und b) einer Polyamin-Komponente, bestehend aus mindestens einem (cyclo)aliphatischen Polyamin mit mindestens zwei primären und/oder sekundären Aminogruppen.

Die DE 43 43 668 schließlich beschreibt aufblähbare, flammhemmende Überzugsmassen, bestehend mindestens aus 4 bis 25 Gew.-% eines filmbildenden Bindemittels, 10 bis 40 Gew.-% Ammoniumpolyphosphat, 8 bis 40 Gew.-% mindestens einer bei Hitzeeinwirkung carbonisierenden Substanz, 6 bis 25 Gew.-% eines Treibmittels, 0 bis 5 Gew.-% Dispergiermittel und 0 bis 25 Gew.-% Füllstoffe.

Das Ziel der vorgenannten Brandschutzbeschichtungen aus dem Stand der Technik ist es, mit möglichst geringen Auftragsmengen möglichst lange Feuerwiderstandszeiten zu erreichen.

Nachteilig bei den vorgenannten Brandschutzbeschichtungen ist insgesamt, dass die im Brandfall gebildeten Schaumstrukturen keine bessere Isolationswirkung zulassen und der Reaktionsstart erst bei Temperaturen T ≥ 180°C stattfindet.

Es ist daher Aufgabe der nachfolgenden Erfindung, solche Brandschutzbeschichtungen zur Verfügung zu stellen, die bei gleicher Auftragsmenge verlängerte Feuerwiderstandszeiten oder bei reduzierter Auftragsmenge bereits gleiche Feuerwiderstandszeiten wie im Stand der Technik erreichen.
Außerdem soll der Reaktionsstart bei Temperaturen T< 180°C stattfinden.

Diese Aufgabe wird gelöst durch eine dämmschichtbildende Brandschutzbeschichtung der eingangs beschriebenen Art, dadurch gekennzeichnet, dass sie ein Phosphinsäuresalz der Formel (I) und/oder ein Diphosphinsäuresalz der Formel (II) enthält, 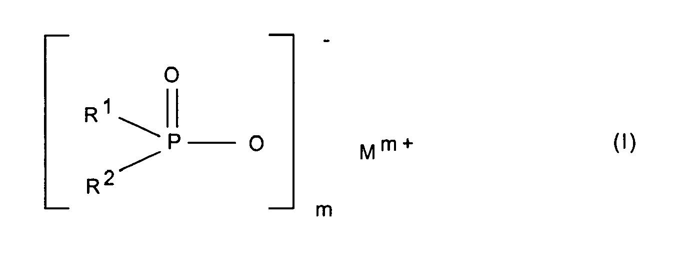 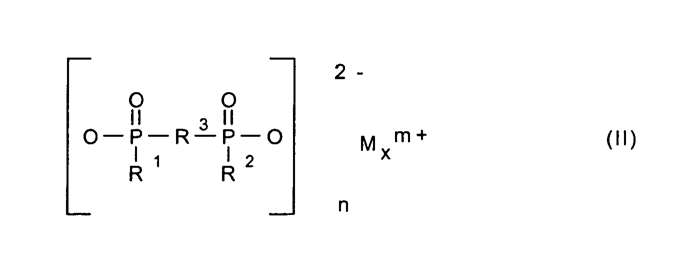 worin
- R¹,R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder - Arylalkylen;
- M: Mg, Ca, Al, Sb, Sn, Ge, Ti, Zn, Fe, Zr, Ce, Bi, Sr, Mn, Li, Na, K und/oder eine protonierte Stickstoffbase;
- m: 1 bis 4;
- n: 1 bis 4;
- x: 1 bis 4
bedeuten.

Bevorzugt bedeutet M Calcium, Aluminium oder Zink.

Unter protonierten Stickstoffbasen werden bevorzugt die protonierten Basen von Ammoniak, Melamin, Triethanolamin, insbesondere NH₄⁺, verstanden.

Bevorzugt sind R¹, R² gleich oder verschieden und bedeuten C₁-C₆-Alkyl, linear oder verzweigt und/oder Phenyl.

Besonders bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Bevorzugt bedeutet R³ Methylen, Ethylen, n-Propylen, iso-Propylen, n-Butylen, tert.-Butylen, n-Pentylen, n-Octylen oder n-Dodecylen; Phenylen oder Naphthylen; Methylphenylen, Ethylphenylen, tert.-Butylphenylen, Methylnaphthylen, Ethylnaphthylen oder tert.-Butylnaphthylen; Phenylmethylen, Phenylethylen, Phenylpropylen oder Phenylbutylen.

Bevorzugt enthält die dämmschichtbildende Brandschutzbeschichtung
5 bis 30 Gewichtsteile filmbildendes Bindemittel,
10 bis 50 Gewichtsteile schaumschichtbildende Substanz,
5 bis 25 Gewichtsteile einer kohlenstoffbildenden Substanz,
5 bis 25 Gewichtsteile eines Treibmittels
10 bis 50 Gewichtsteile an üblichen Hilfs- und Zusatzstoffen
1 bis 10 Gewichtsteile Phosphinsäuresalz der Formel (I) und/oder ein Diphosphinsäuresalz der Formel (II) und/oder deren Polymere.

Besonders bevorzugt enthält die dämmschichtbildende Brandschutzbeschichtung
10 bis 25 Gewichtsteile filmbildendes Bindemittel,
15 bis 40 Gewichtsteile schaumschichtbildende Substanz,
7 bis 15 Gewichtsteile einer kohlenstoffbildenden Substanz,
7 bis 15 Gewichtsteile eines Treibmittels
20 bis 40 Gewichtsteile an üblichen Hilfs- und Zusatzstoffen
2 bis 5 Gewichtsteile Phosphinsäuresalz der Formel (I) und/oder ein Diphosphinsäuresalz der Formel (II) und/oder deren Polymere.

Bevorzugt enthält die dämmschichtbildende Brandschutzbeschichtung als filmbildende Bindemittel
Homopolymerisate auf Basis Vinylacetat,
Copolymerisate auf Basis Vinylacetat, Ethylen und Vinylchlorid,
Copolymerisate auf Basis Vinylacetat und dem Vinylester einer langkettigen, verzweigten Carbonsäure,
Copolymerisate auf Basis Vinylacetat und Maleinsäure-di-n-Butylester,
Copolymerisate auf Basis Vinylacetat und Acrylsäureester,
Copolymerisate auf Basis Styrol und Acrylsäureester und/oder
Copolymerisate auf Basis Acrylsäureester,
Vinyltoluol/Acrylat-Copolymer,
Styrol/Acrylat-Copolymer,
Vinyl/Acrylat-Copolymer,
Selbstvernetzende Polyurethan-Dispersionen.

Bevorzugt enthält die dämmschichtbildende Brandschutzbeschichtung als schaumbildende Substanzen Ammoniumsalze von Phosphorsäuren und/oder Polyphosphorsäuren.

Bevorzugt enthält die dämmschichtbildende Brandschutzbeschichtung als kohlenstoffbildende Substanzen Kohlenhydrate.

Bevorzugt werden als Kohlenhydrate Pentaerythrit, Dipentaerythrit, Tripentaerythrit und/oder Polykondensate des Pentaerythrits eingesetzt.

Bevorzugt enthält die dämmschichtbildende Brandschutzbeschichtung als Treibmittel Melamin und/oder Guanidin sowie deren Salze und/oder Dicyandiamide.

Bevorzugt handelt es sich bei den Melaminsalzen um Melaminphoshat, Melamincyanurat, Melaminborat, Melaminsilikat und bei dem Guanidinsalz um Guanidinphosphat.

Bevorzugt enthält die dämmschichtbildende Brandschutzbeschichtung weiterhin Melaminpolyphosphat.

Bevorzugt enthält die dämmschichtbildende Brandschutzbeschichtung als Hilfs- und Zusatzstoffe Glasfasern, Mineralfasern, Kaolin, Talkum, Aluminiumoxid, Aluminiumhydroxid, Magnesiumhydroxid, Fällungskieselsäuren, Silikate und/oder pulverisierte Cellulosen.

Die erfindungsgemäße Brandschutzbeschichtung (Intumeszenzbeschichtung) gelangt in Form eines streich-, spritz- oder rollfähigen Anstrichmittels zum Schutz von unterschiedlichsten Untergründen, vorzugsweise von Stahl, Holz, Elektrokabeln und Rohren, zum Einsatz.
In den folgenden Beispielen wurden Intumeszenzbeschichtungen hergestellt, auf Normstahlplatten aufgetragen und ihre Wirksamkeit ermittelt. Die Prüfung der Isolierfähigkeit erfolgte analog DIN 4102.

In den Beispielen wurden folgende Produkte eingesetzt:
®Pliolite (Solid) (Goodyear/Frankreich) Es handelt sich um ein newtonisches, thermoplastisches Harz auf Basis von Vinyltoluol/Acrylat-Copolymere.
®Mowilith DM230 Es handelt sich um eine ca. 50 %ige, weichmacherfreie, wässerige Copolymerisat-Dispersion aus Vinylacetat und Versaticsäureester.
®Exolit AP 462 (Clariant GmbH, Frankfurt am Main) Es handelt sich um ein mikroverkapseltes Ammoniumpolyphosphat auf Basis ®Exolit AP 422, das nach dem Verfahren der EP-B-0 180 795 hergestellt wurde und etwa 10 Masse-% Kapselmaterial, bestehend aus einem gehärteten Melamin/Formaldehyd-Harz, enthält.

Bei ®Exolit AP 422 (Clariant GmbH, Frankfurt am Main) handelt es sich um ein freifließendes, pulverförmiges, in Wasser schwer lösliches Ammoniumpolyphosphat der Formel (NH₄PO₃)ₙ mit n = 20 bis 1000, insbesondere 500 bis 1000. Der Anteil der Teilchen mit einer Teilchengröße kleiner 45 µm beträgt mehr als 99 %.

### Beispiel 1 (Vergleich)

Es wurden die folgenden Substanzen nacheinander vermischt und anschließend entsprechend auf die zu prüfende Platte aufgetragen:
38 Gewichtsteile ®Exolit AP 462
10 Gewichtsteile ®Pliolite (Solid)
8 Gewichtsteile Melamin
8 Gewichtsteile Dipentaerythrit
8 Gewichtsteile Titandioxid ad 100 Gewichtsteile Verdicker, Weichmacher, Lösungsmittel.
   Die Brandprüfung der beschichteten Platte analog DIN 4102 ergab eine Starttemperatur der Reaktion T = 180°C, bei 100 % Auftragsmenge.

### Beispiel 2 (Erfindung)

Es wurden die folgenden Substanzen nacheinander vermischt und anschließend entsprechend auf die zu prüfende Platte aufgetragen:
32 Gewichtsteile ®Exolit AP 462
10 Gewichtsteile ®Pliolite (Solid)
13 Gewichtsteile Melamin
8 Gewichtsteile Dipentaerythrit
8 Gewichtsteile Titandioxid
5 Gewichtsteile Diethylphosphinsäure-Aluminiumsalz ad 100 Gewichtsteile Verdicker, Weichmacher, Lösungsmittel.

Die Brandprüfung der beschichteten Platte analog DIN 4102 ergab eine Starttemperatur der Reaktion T = 100°C, bei 100 % Auftragsmenge.

### Beispiel 3 (Vergleich)

Es wurden die folgenden Substanzen nacheinander vermischt und anschließend entsprechend auf die zu prüfende Platte aufgetragen:
30 Gewichtsteile ®Exolit AP 422
22 Gewichtsteile ®Mowilith DM230
19 Gewichtsteile Melamin
13 Gewichtsteile Pentaerythrit
5 Gewichtsteile Titandioxid
ad 100 Gewichtsteile Verdicker, Füllstoffe, Wasser, Dispergiermittel, Konservierungsmittel.

Die Brandprüfung der beschichteten Platte analog DIN 4102 ergab die Feuerwiderstandszeit von 86 Minuten bei 100 % Auftragsmenge.

### Beispiel 4 (Erfindung)

Es wurden die folgenden Substanzen nacheinander vermischt und anschließend entsprechend auf die zu prüfende Platte aufgetragen:
18 Gewichtsteile ®Exolit AP 422
22 Gewichtsteile ®Mowilith DM230
30 Gewichtsteile Melamin
13 Gewichtsteile Pentaerythrit
5 Gewichtsteile Titandioxid
2 Gewichtsteile Diethylphosphinsäure-Aluminiumsalz ad 100 Gewichtsteile Verdicker, Füllstoffe, Wasser, Dispergiermittel, Konservierungsmittel.

Die Brandprüfung der beschichteten Platte analog DIN 4102 ergab die Feuerwiderstandszeit von 87 Minuten bei 80 % Auftragsmenge.

Vorteilhafterweise kann mit der erfindungsgemäßen Brandschutzbeschichtung die Feuerwiderstandszeit erhöht bzw. die Auftragsmenge verringert werden. Ebenfalls ergibt sich eine stark heruntergesetzte Temperatur für den Reaktionsstart.

## Patentansprüche

1. Dämmschichtbildende Brandschutzbeschichtung auf Basis von im Brandfall schaumschichtbildenden und kohlenstoffbildenden Substanzen, filmbildenden Bindemitteln, Treibmitteln und üblichen Hilfs- und Zusatzstoffen, **dadurch gekennzeichnet, dass** sie ein Phosphinsäuresalz der Formel (1) und/oder ein Diphosphinsäuresalz der Formel (11) enthält, 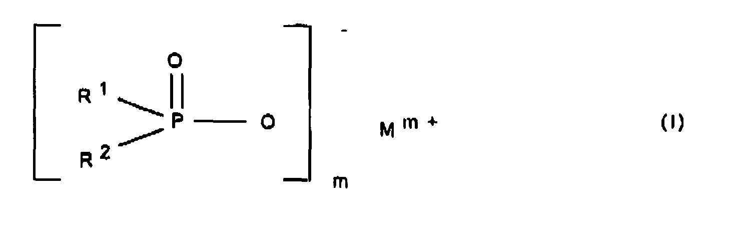 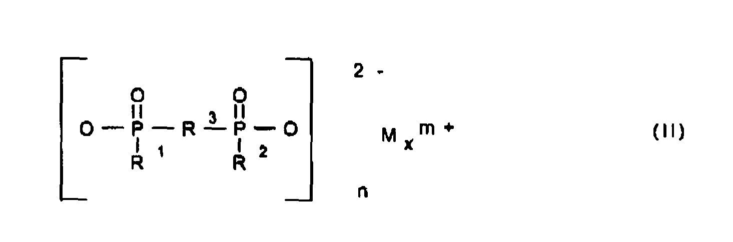 worin
R¹, R² gleich oder verschieden sind und C₁-C₆-Alkyl, linear oder verzweigt und/oder Aryl;
R³ C₁-C₁₀-Alkylen, linear oder verzweigt, C₆-C₁₀-Arylen, -Alkylarylen oder -Arylalkylen;
M Mg, Ca, Al, Sb, Sn, Ge, Ti, Zn, Fe, Zr, Ce, Bi, Sr, Mn, Li, Na, K und/oder eine protonierte Stickstoffbase;
m 1 bis 4;
n 1 bis 4;
x 1 bis 4
bedeuten.

2. Dämmschichtbildende Brandschutzbeschichtung nach Anspruch 1, **dadurch gekennzeichnet, dass** M Calcium, Aluminium oder Zink bedeutet.

3. Dämmschichtbildende Brandschutzbeschichtung nach Anspruch 1 oder 2, **dadurch gekennzeichnet, dass** R¹, R² gleich oder verschieden sind und C₁-C₆-Alkyl, linear oder verzweigt und/oder Phenyl bedeuten.

4. Dämmschichtbildende Brandschutzbeschichtung nach einem oder mehreren der Ansprüche 1 bis 3, **dadurch gekennzeichnet, dass** R¹, R² gleich oder verschieden sind und Methyl, Ethyl, n-Propyl, iso-Propyl, n-Butyl, tert.-Butyl, n-Pentyl und/oder Phenyl bedeuten.

5. Dämmschichtbildende Brandschutzbeschichtung nach einem oder mehreren der Ansprüche 1 bis 4, **dadurch gekennzeichnet, dass** R³ Methylen, Ethylen, n-Propylen, iso-Propylen, n-Butylen, tert.-Butylen, n-Pentylen, n-Octylen oder n-Dodecylen; Phenylen oder Naphthylen; Methylphenylen, Ethylphenylen, tert.-Butylphenylen, Methylnaphthylen, Ethylnaphthylen oder tert.-Butylnaphthylen; Phenylmethylen, Phenylethylen, Phenylpropylen oder Phenylbutylen bedeutet.

6. Dämmschichtbildende Brandschutzbeschichtung nach einem oder mehreren der Ansprüche 1 bis 5, **dadurch gekennzeichnet, dass** sie
5 bis 30 Gewichtsteile filmbildendes Bindemittel,
10 bis 50 Gewichtsteile schaumschichtbildende Substanz,
5 bis 25 Gewichtsteile einer kohlenstoffbildenden Substanz,
5 bis 25 Gewichtsteile eines Treibmittels und
10 bis 50 Gewichtsteile an üblichen Hilfs- und Zusatzstoffen
1 bis 10 Gewichtsteile Diethylphosphinsäure-Aluminiumsalz
enthält.

7. Dämmschichtbildende Brandschutzbeschichtung nach einem oder mehreren der Ansprüche 1 bis 6, **dadurch gekennzeichnet, dass** sie
10 bis 25 Gewichtsteile filmbildendes Bindemittel,
15 bis 40 Gewichtsteile schaumschichtbildende Substanz,
7 bis 15 Gewichtsteile einer kohlenstoffbildenden Substanz,
7 bis 15 Gewichtsteile des Treibmittels und
20 bis 40 Gewichtsteile an üblichen Hilfs- und Zusatzstoffen
2 bis 5 Gewichtsteile Diethylphosphinsäure-Aluminiumsalz
enthält.

8. Dämmschichtbildende Brandschutzbeschichtung nach einem oder mehreren der Ansprüche 1 bis 7, **dadurch gekennzeichnet, dass** als filmbildende Bindemittel Homopolymerisate auf Basis Vinylacetat,
Copolymerisate auf Basis Vinylacetat, Ethylen und Vinylchlorid,
Copolymerisate auf Basis Vinylacetat und dem Vinylester einer langkettigen, verzweigten Carbonsäure,
Copolymerisate auf Basis Vinylacetat und Maleinsäure-di-n-Butylester,
Copolymerisate auf Basis Vinylacetat und Acrylsäureester,
Copolymerisate auf Basis Styrol und Acrylsäureester und/oder
Copolymerisate auf Basis Acrylsäureester,
Vinyltoluol/Acrylat-Copolymer,
Styrol/Acrylat-Polymere,
Vinyl/Acrylat-Copolymere,
Selbstvernetzende Polyurethan-Dispersionen
enthalten sind.

9. Dämmschichtbildende Brandschutzbeschichtung nach einem oder mehreren der Ansprüche 1 bis 8, **dadurch gekennzeichnet, dass** als schaumbildende Substanzen Ammoniumsalze von Phosphorsäuren und/oder Polyphosphorsäuren enthalten sind.

10. Dämmschichtbildende Brandschutzbeschichtung nach einem oder mehreren der Ansprüche 1 bis 9, **dadurch gekennzeichnet, dass** als kohlenstoffbildende Substanzen Kohlenhydrate enthalten sind.

11. Dämmschichtbildende Brandschutzbeschichtung nach Anspruch 7, **dadurch gekennzeichnet, dass** als Kohlenhydrate Pentaerythrit, Dipentaerythrit, Tripentaerythrit und/oder Polykondensate des Pentaerythrits eingesetzt werden.

12. Dämmschichtbildende Brandschutzbeschichtung nach einem oder mehreren der Ansprüche 1 bis 11, **dadurch gekennzeichnet, dass** als Hilfs- und Zusatzstoffe Glasfasern, Mineralfasern, Kaolin, Talkum, Aluminiumoxid, Aluminiumhydroxid, Magnesiumhydroxid, Fällungskieselsäuren, Silikate und/oder pulverische Cellulosen enthalten sind.

13. Dämmschichtbildende Brandschutzbeschichtung nach einem oder mehreren der Ansprüche 1 bis 12, **dadurch gekennzeichnet, dass** als Treibmittel Melamin und/oder Guanidin sowie deren Salze und/oder Dicyandiamide eingesetzt werden.

14. Dämmschichtbildende Brandschutzbeschichtung nach Anspruch 13, **dadurch gekennzeichnet, dass** als Melaminsalze Melaminphoshat, Melamincyanurat, Melaminborat, Melaminsilikat und als Guanidinsalz Guanidinphosphat eingesetzt werden.

15. Dämmschichtbildende Brandschutzbeschichtung nach einem oder mehreren der Ansprüche 1 bis 14, **dadurch gekennzeichnet, dass** sie weiterhin Melaminpolyphosphat enthält.

## Claims

1. A fire-protection coating which forms an insulating layer and is based on substances which, in the event of a fire, form a foam layer and form carbon, on film-forming binders, on blowing agents, and on conventional auxiliaries and additives, which comprises a phosphinic salt of the formula (I) and/or a diphosphinic salt of the formula (II), 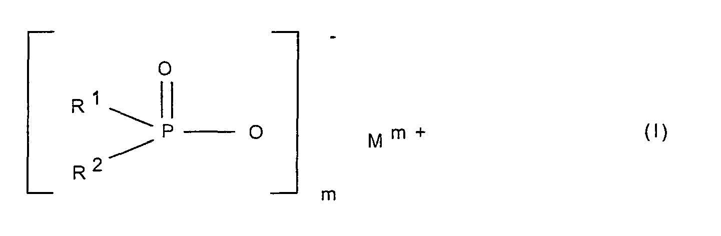 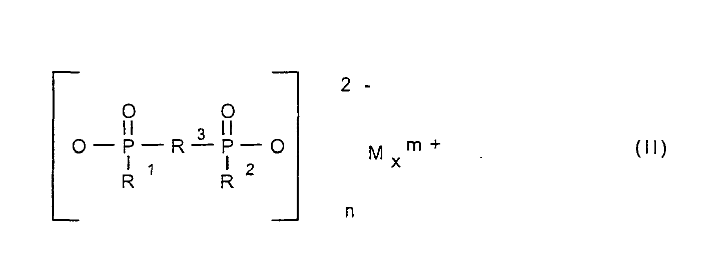 where
R¹, R² are identical or different and are C₁-C₆-alkyl, linear or branched and/or aryl;
R³ is C₁-C₁₀-alkylene, linear or branched, C₆-C₁₀-arylene, -alkylarylene, or -arylalkylene;
M is Mg, Ca, Al, Sb, Sn, Ge, Ti, Zn, Fe, Zr, Ce, Bi, Sr, Mn, Li, Na, K, and/or a protonated nitrogen base;
m is from 1 to 4;
n is from 1 to 4;
x is from 1 to 4.

2. The fire-protection coating which forms an insulating layer, as claimed in claim 1, wherein M is calcium, aluminum, or zinc.

3. The fire-protection coating which forms an insulating layer, as claimed in claim 1 or 2, wherein R¹ and R² are identical or different and are C₁-C₆-alkyl, linear or branched, and/or phenyl.

4. The fire-protection coating which forms an insulating layer, as claimed in one or more of claims 1 to 3, wherein R¹ and R² are identical or different and are methyl, ethyl, n-propyl, isopropyl, n-butyl, tert-butyl, n-pentyl and/or phenyl.

5. The fire-protection coating which forms an insulating layer, as claimed in one or more of claims 1 to 4, wherein R³ is methylene, ethylene, n-propylene, isopropylene, n-butylene, tert-butylene, n-pentylene, n-octylene or n-dodecylene; phenylene or naphthylene; methylphenylene, ethylphenylene, tert-butylphenylene, methylnaphthylene, ethylnaphthylene or tert-butylnaphthylene; phenylmethylene, phenylethylene, phenylpropylene or phenylbutylene.

6. The fire-protection coating which forms an insulating layer, as claimed in one or more of claims 1 to 5, which comprises
from 5 to 30 parts by weight of film-forming binder,
from 10 to 50 parts by weight of substance which forms a foam layer,
from 5 to 25 parts by weight of a substance which forms carbon,
from 5 to 25 parts by weight of a blowing agent, and
from 10 to 50 parts by weight of conventional auxiliaries and additives, and
from 1 to 10 parts by weight of aluminum diethylphosphinate.

7. The fire-protection coating which forms an insulating layer, as claimed in one or more of claims 1 to 6, which comprises
from 10 to 25 parts by weight of film-forming binder,
from 15 to 40 parts by weight of substance which forms a foam layer,
from 7 to 15 parts by weight of a substance which forms carbon,
from 7 to 15 parts by weight of the blowing agent, and
from 20 to 40 parts by weight of conventional auxiliaries and additives, and
from 2 to 5 parts by weight of aluminum diethylphosphinate.

8. The fire-protection coating which forms an insulating layer, as claimed in one or more of claims 1 to 7, wherein the film-forming binders present comprise
homopolymers based on vinyl acetate,
copolymers based on vinyl acetate, ethylene, and vinyl chloride,
copolymers based on vinyl acetate and on the vinyl ester of a long-chain, branched carboxylic acid,
copolymers based on vinyl acetate and di-n-butyl maleate,
copolymers based on vinyl acetate and esters of acrylic acid,
copolymers based on styrene and esters of acrylic acid, and/or
copolymers based on esters of acrylic acid,
vinyltoluene/acrylate copolymer,
styrene/acrylate polymers,
vinyl/acrylate copolymers,
self-crosslinking polyurethane dispersions.

9. The fire-protection coating which forms an insulating layer, as claimed in one or more of claims 1 to 8, wherein the foam-forming substances present comprise ammonium salts of phosphoric acids and/or polyphosphoric acids.

10. The fire-protection coating which forms an insulating layer, as claimed in one or more of claims 1 to 9, wherein the carbon-forming substances present comprise carbohydrates.

11. The fire-protection coating which forms an insulating layer, as claimed in claim 7, wherein the carbohydrates used comprise pentaerythritol, dipentaerythritol, tripentaerythritol and/or polycondensates of pentaerythritol.

12. The fire-protection coating which forms an insulating layer, as claimed in one or more of claims 1 to 11, wherein the auxiliaries and additives present comprise glass fibers, mineral fibers, kaolin, talc, aluminum oxide, aluminum hydroxide, magnesium hydroxide, precipitated silicas, silicates and/or pulverulent celluloses.

13. The fire-protection coating which forms an insulating layer, as claimed in one or more of claims 1 to 12, wherein the blowing agents used comprise melamine and/or guanidine, or else their salts, and/or dicyandiamides.

14. The fire-protection coating which forms an insulating layer, as claimed in claim 13, wherein the melamine salts used comprise melamine phosphate, melamine cyanurate, melamine borate, melamine silicate, and the guanidine salt used comprises guanidine phosphate.

15. The fire-protection coating which forms an insulating layer, as claimed in one or more of claims 1 to 14, which also comprises melamine polyphosphate.

## Revendications

1. Revêtement de protection contre l'incendie formant une couche protectrice à base de substances qui forment, dans le cas d'un incendie, une couche de mousse et du carbone, de liants filmogènes, d'agents porogènes et d'adjuvants et d'additifs usuels, **caractérisé en ce qu'**il contient un sel d'acide phosphinique de formule (I) et/ou un sel d'acide diphosphinique de formule (II) 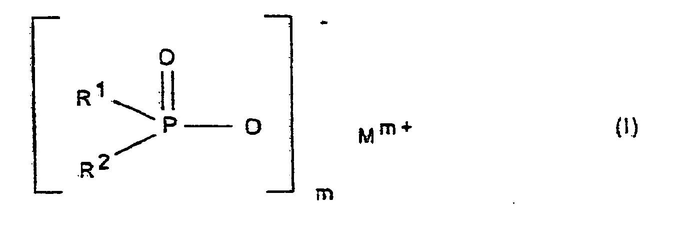 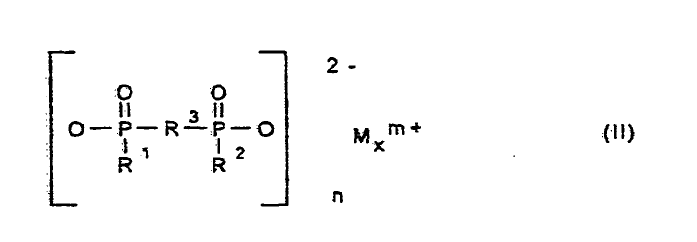 où
R¹, R² sont identiques ou différents et représentent un groupe alkyle en C₁-C₆ linéaire ou ramifié et/ou aryle;
R³ représente un groupe alkylène en C₁-C₁₀ linéaire ou ramifié, arylène, alkylarylène ou arylalkylène en C₆-C₁₀ ;
M représente Mg, Ca, Al, Sb, Sn, Ge, Ti, Zn, Fe, Zr, Ce, Bi, Sr, Mn, Li, Na, K et/ou une base azotée protonée ;
m représente un nombre de 1 à 4;
n représente un nombre de 1 à 4;
x représente un nombre de 1 à 4.

2. Revêtement de protection contre l'incendie formant une couche protectrice selon la revendication 1, **caractérisé en ce que** M représente un atome de calcium, d'aluminium ou de zinc.

3. Revêtement de protection contre l'incendie formant une couche protectrice selon la revendication 1 ou 2, **caractérisé en ce que** R¹, R², sont identiques ou différents et représentent un groupe alkyle en C₁-C₆ linéaire ou ramifié et/ou phényle.

4. Revêtement de protection contre l'incendie formant une couche protectrice selon une ou plusieurs des revendications 1 à 3, **caractérisé en ce que** R¹, R² sont identiques ou différents et représentent un groupe méthyle, éthyle, n-propyle, iso-propyle, n-butyle, tert.-butyle, n-pentyle et/ou phényle.

5. Revêtement de protection contre l'incendie formant une couche protectrice selon une ou plusieurs des revendications 1 à 4, **caractérisé en ce que** R³ représente un méthylène, éthylène, n-propylène, iso-propylène, n-butylène, tert.-butylène, n-pentylène, n-octylène ou n-dodécylène ; phénylène ou naphtylène ; méthylphénylène, éthylphénylène, tert.-butylphénylène, méthylnaphtylène, éthylnaphtylène ou tert.-butylnaphtylène ; phénylméthylène, phényléthylène, phénylpropylène ou phénylbutylène.

6. Revêtement de protection contre l'incendie formant une couche protectrice selon une ou plusieurs des revendications 1 à 5, **caractérisé en ce qu'**il contient
5 à 30 parties en masse de liant filmogène,
10 à 50 parties en masse de substance formant une couche de mousse,
5 à 25 parties en masse d'une substance formant du carbone,
5 à 25 parties en masse d'un agent porogène et
10 à 50 parties en masse d'adjuvants et d'additifs usuels,
1 à 10 parties en masse de sel d'aluminium d'acide diéthylphosphinique.

7. Revêtement de protection contre l'incendie formant une couche protectrice selon une ou plusieurs des revendications 1 à 6, **caractérisé en ce qu'**il contient
10 à 25 parties en masse de liant filmogène,
15 à 40 parties en masse de substance formant une couche de mousse,
7 à 15 parties en masse de d'une substance formant du carbone,
7 à 15 parties en masse d'un agent porogène et
20 à 40 parties en masse d'adjuvants et d'additifs usuels,
2 à 5 parties en masse de sel d'aluminium d'acide diéthylphosphinique.

8. Revêtement de protection contre l'incendie formant une couche protectrice selon une ou plusieurs des revendications 1 à 7, **caractérisé en ce que**, en tant que liant filmogène, sont contenus des
homopolymères à base d'acétate de vinyle,
copolymères à base d'acétate de vinyle, d'éthylène et de chlorure de vinyle,
copolymères à base d'acétate de vinyle et de l'ester vinylique d'un acide carboxylique ramifié à chaîne longue,
copolymères à base d'acétate de vinyle et d'ester di-n-butylique de l'acide maléique,
copolymères à base d'acétate de vinyle et d'esters de l'acide acrylique,
copolymères à base de styrène et d'esters de l'acide acrylique et/ou
copolymères à base d'esters de l'acide acrylique,
copolymères de vinyltoluène/acrylate,
polymères de styrène/acrylate,
copolymère vinyle/acrylate
dispersions de polyuréthanne autoréticulantes.

9. Revêtement de protection contre l'incendie formant une couche protectrice selon une ou plusieurs des revendications 1 à 8, **caractérisé en ce qu'**il contient en tant que substances moussantes des sels d'ammonium d'acides phosphoriques et/ou d'acides polyphosphoriques.

10. Revêtement de protection contre l'incendie formant une couche protectrice selon une ou plusieurs des revendications 1 à 9, **caractérisé en ce qu'**il contient des carbohydrates en tant que substances formant du carbone.

11. Revêtement de protection contre l'incendie formant une couche protectrice selon la revendication 7, **caractérisé en ce qu'**il contient en tant que carbohydrates du pentaérythritol, du dipentaérythritol, du tripentaérythritol et/ou des polycondensats de pentaérythritol.

12. Revêtement de protection contre l'incendie formant une couche protectrice selon une ou plusieurs des revendications 1 à 11, **caractérisé en ce qu'**il contient en tant qu'adjuvants et additifs des fibres de verre, des fibres minérales, du kaolin, du talc, de l'oxyde d'aluminium, de l'hydroxyde d'aluminium, de l'hydroxyde de magnésium, des silices précipitées, des silicates et/ou des celluloses pulvérisées.

13. Revêtement de protection contre l'incendie formant une couche protectrice selon une ou plusieurs des revendications 1 à 12, **caractérisé en ce qu'**on utilise en tant qu'agent porogène de la mélamine et/ou de la guanidine ainsi que leurs sels et/ou des dicyanodiamides.

14. Revêtement de protection contre l'incendie formant une couche protectrice selon la revendication 13, **caractérisé en ce qu'**on utilise en tant que sels de mélamine du phosphate de mélamine, du cyanurate de mélamine, du borate de mélamine, du silicate de mélamine et pour le sel de guanidine du phosphate de guanidine.

15. Revêtement de protection contre l'incendie formant une couche protectrice selon une ou plusieurs des revendications 1 à 14, **caractérisé en ce qu'**il contient de plus du polyphosphate de mélamine.
